# EUROPEAN PATENT APPLICATION

(11) **EP 4 822 716 A1**
(43) Date of publication of application: **14.10.2026**
(21) Application number: 24900584.4
(22) Date of filing: 02.12.2024
(51) Int. Cl.: H01B 1/06, C03C 10/02, C03C 10/04, H01B 1/10, H01B 13/00, H01M 10/052, H01M 10/0562

(54) **SULFIDE SOLID ELECTROLYTE AND METHOD FOR MANUFACTURING SAME**

(30) Priority: 06.12.2023 JP 2023206287
(71) Applicant: AGC Inc., Chiyoda-ku Tokyo 100-8405 (JP)
(72) Inventor: FUJII, Naoki, Tokyo 100-8405 (JP); AKATSUKA, Kosho, Tokyo 100-8405 (JP)
(74) Representative: Müller-Boré & Partner Patentanwälte PartG mbB
(86) International application number: PCT/JP2024/042575
(87) International publication number: WO 2025/121290

(57) **Abstract**

The present invention relates to a sulfide solid electrolyte which has a crystal phase containing a crystal that is represented by composition formula RₐM_{b}S_{c}X_{d} (wherein 3 ≤ a ≤ 7, b = 1, 3 ≤ c ≤ 6, 0.1 ≤ d ≤ 2, R represents an alkali metal element, M represents an element which can have a four-coordinate structure with S and is selected from among the elements in groups 2 to 15 of the periodic table, S represents elemental sulfur, and X represents a halogen element), wherein: in the composition formula, M is composed of a total of three or more elements that include a group 14 element M_{A} and a group 15 element M_{B}; the crystal has three or more tetrahedral structures that include M_{A}S₄ and M_{B}S₄; and the proportion of Ge in M in the crystal is 0.05 or less in terms of the molar ratio.

## Description

### TECHNICAL FIELD

The present invention relates to a sulfide solid electrolyte and a method for producing the sulfide solid electrolyte.

### BACKGROUND ART

Lithium ion secondary batteries are widely used in portable electronic devices such as a mobile phone and a notebook computer.

In the related art, a liquid electrolyte has been used in a lithium ion secondary battery. On the other hand, an all-solid-state lithium ion secondary battery in which a solid electrolyte is used as an electrolyte of the lithium ion secondary battery has attracted attention from the viewpoint that improvement in safety, high-speed charging and discharging, and a reduction in size of a case can be expected.

Among the solid electrolytes used in the all-solid-state lithium ion secondary battery, the sulfide solid electrolyte exhibits a high lithium ion conductivity. Among them, an argyrodite solid electrolyte exhibits a higher lithium ion conductivity.

For example, Patent Literature 1 discloses an argyrodite sulfide solid electrolyte that contains a compound represented by a compositional formula: Li₇₋ₓPS_{6-X}Ha_{X} (where Ha represents Cl or Br) (where x = 0.2 to 1.8), and a lightness L value of an L* a* b* color system is 60.0 or more.

However, an argyrodite sulfide solid electrolyte known in the related art easily reacts with moisture and readily generates hydrogen sulfide (H₂S), and when the argyrodite-type sulfide solid electrolyte is exposed to an atmosphere containing moisture, the lithium ion conductivity significantly decreases.

In contrast, Patent Literature 2 discloses an argyrodite Li_{6.5}[P_{0.25}Si_{0.25}Ge_{0.25}Sb_{0.25}]S₅I. Accordingly, an amount of H₂S generated is reduced, a decrease in the lithium ion conductivity when exposed to an atmosphere containing moisture is prevented, and water resistance is excellent.

### CITATION LIST

### PATENT LITERATURE

Patent Literature 1: WO2015/012042
Patent Literature 2: WO2023/111138

### SUMMARY OF INVENTION

### TECHNICAL PROBLEM

However, when the sulfide solid electrolyte described in Patent Literature 2 is mounted on a lithium ion battery, it is found that there are problems in oxidation resistance and reduction resistance, and improvement in cycle characteristics is expected.

Therefore, an object of the present invention is to provide a sulfide solid electrolyte having good cycle characteristics while achieving good water resistance, and a method for producing the sulfide solid electrolyte.

### SOLUTION TO PROBLEM

According to the studies by the present inventors, when an MS₄ tetrahedral structure having a four-coordinate structure formed by M as a specific element and S is contained in a crystal, the amount of H₂S generated can be reduced, a decrease in ionic conductivity when exposed to an atmosphere containing moisture can be prevented, and water resistance is improved. When three or more MS₄ tetrahedral structures are contained in the crystal, the water resistance is further improved. In addition, the present inventors have found that excellent oxidation resistance and reduction resistance can be achieved, and good cycle characteristics can also be achieved by reducing the content of Ge in the crystal or forming a crystal containing no Ge, and have completed the present invention.

That is, the present invention relates to the following [1] to [18].
[1] A sulfide solid electrolyte including a crystal phase,
   in which the crystal phase includes a crystal represented by a compositional formula: RₐM_{b}S_{c}X_{d},
   in the compositional formula, R represents an alkali metal element, M represents an element among elements of Groups 2 to 15 of the periodic table which is capable of forming a four-coordinate structure with S, and M is composed of a total of three or more elements including M_{A} which is an element belonging to Group 14 and M_{B} which is an element belonging to Group 15, S represents a sulfur element, and X represents a halogen element,
   in the compositional formula, 3 ≤ a ≤ 7, b = 1, 3 ≤ c ≤ 6, and 0.1 ≤ d ≤ 2 are satisfied,
   the crystal includes three or more tetrahedral structures including an M_{A}S₄ tetrahedral structure and an M_{B}S₄ tetrahedral structure, and
   in the crystal, a proportion of Ge in M is 0.05 or less in terms of a molar ratio.
[2] The sulfide solid electrolyte according to [1], including, as R in the compositional formula, at least one selected from the group consisting of Li, Na, and K.
[3] The sulfide solid electrolyte according to [1] or [2], including, as M_{A} included in M in the compositional formula, one or more selected from Si, Ge, Sn, and Pb, and
   including, as M_{B} included in M in the compositional formula, one or more selected from P, As, Sb, and Bi.
[4] The sulfide solid electrolyte according to any one of [1] to [3], including Sb as M_{B} included in M in the compositional formula.
[5] The sulfide solid electrolyte according to [4],
   in which a proportion of Sb in M in the crystal is 0.01 to 0.9 in a molar ratio.
[6] The sulfide solid electrolyte according to any one of [1] to [5], including Si as M_{A} included in M in the compositional formula.
[7] The sulfide solid electrolyte according to [6],
   in which a proportion of Si in M in the crystal is 0.01 to 0.6 in a molar ratio.
[8] The sulfide solid electrolyte according to any one of [1] to [7], including P as M_{B} included in M in the compositional formula.
[9] The sulfide solid electrolyte according to [8],
   in which a proportion of P in M in the crystal is more than 0 and 0.7 or less in a molar ratio.
[10] The sulfide solid electrolyte according to any one of [1] to [9],
   in which M in the compositional formula is composed of a total of three or more elements including two or more of at least one of M_{A} which is an element belonging to Group 14 and M_{B} which is an element belonging to Group 15.
[11] The sulfide solid electrolyte according to any one of [1] to [10],
   in which M in the compositional formula is composed of a total of four or more elements.
[12] The sulfide solid electrolyte according to any one of [1] to [11],
   in which the crystal has a crystal structure of an F-43m space group.
[13] The sulfide solid electrolyte according to [12],
   in which a content of a crystal having the crystal structure of the F-43m space group in the sulfide solid electrolyte is 50 mass% or more.
[14] The sulfide solid electrolyte according to any one of [1] to [13],
   in which in the crystal, a value of an ionic radius parameter is 0.47 to 0.55, in which the ionic radius parameter is represented, using an ionic radius of an element constituting M, by the following formula: $Ionic radius parameter = \left({b}_{1}\times {r}_{1}\right) + \left({b}_{2}\times {r}_{2}\right) + … + \left({b}_{n}\times {r}_{n}\right) ,$
   in which M in the compositional formula is composed of n types of elements M₁ to Mₙ, where n is a natural number, b₁ to bₙ in the formula each represent a compositional ratio of each of the elements M₁ to Mₙ, (b₁ + b₂ + ... + bₙ) = 1 is satisfied, and r₁ to rₙ each represent an ionic radius (Å) for four-coordination at a valence adopted by each of the elements M₁ to Mₙ in the crystal.
[15] The sulfide solid electrolyte according to any one of [1] to [14],
   in which a lithium ion conductivity at 25°C is 0.1 × 10⁻³ S/cm or more.
[16] A method for producing the sulfide solid electrolyte according to any one of [1] to [15], the method including, in order:
   mixing raw materials including elements R, M, S, and X to obtain a raw material mixture;
   performing a heat treatment to obtain a melt of the raw material mixture; and
   cooling the melt to precipitate a crystal,
   in which among the elements, R represents an alkali metal element, M represents an element among the elements of Groups 2 to 15 of the periodic table which is capable of forming a four-coordinate structure with S, M is composed of a total of three or more elements including M_{A} which is an element belonging to Group 14 and M_{B} which is an element belonging to Group 15, S represents a sulfur element, and X represents a halogen element.
[17] The method for producing the sulfide solid electrolyte according to [16], further including performing a post-heat treatment by heating after the crystal is precipitated.
[18] The method for producing the sulfide solid electrolyte according to [17],
   in which the post-heat treatment is performed under a condition of a temperature of 300°C to 600°C, a time of 10 minutes to 20 hours, an inert atmosphere, and a dew point of - 20°C or lower.

### ADVANTAGEOUS EFFECTS OF INVENTION

According to the present invention, a sulfide solid electrolyte that achieves good water resistance and has good cycle characteristics is obtained. Therefore, a secondary battery on which the sulfide solid electrolyte is mounted has excellent battery characteristics.

### BRIEF DESCRIPTION OF DRAWINGS

[FIG. 1] FIG. 1 is a flow diagram showing an aspect of a method for producing a sulfide solid electrolyte according to the present embodiment.
[FIG. 2] FIG. 2 is a flow diagram showing an aspect of a method for producing the sulfide solid electrolyte according to the present embodiment.
[FIG. 3] FIG. 3 is an XRD pattern of the sulfide solid electrolyte in Example 1.
[FIG. 4] FIG. 4 is an XRD pattern of the sulfide solid electrolyte in Example 2.
[FIG. 5] FIG. 5 is an XRD pattern of the sulfide solid electrolyte in Example 3.
[FIG. 6] FIG. 6 is an XRD pattern of the sulfide solid electrolyte in Example 4.
[FIG. 7] FIG. 7 is an XRD pattern of the sulfide solid electrolyte in Example 5.
[FIG. 8] FIG. 8 is an XRD pattern of the sulfide solid electrolyte in Example 6.
[FIG. 9] FIG. 9 is an XRD pattern of the sulfide solid electrolyte in Example 7.
[FIG. 10] FIG. 10 is an XRD pattern of the sulfide solid electrolyte in Example 8.

### DESCRIPTION OF EMBODIMENTS

Hereinafter, the present invention is described in detail, but the present invention is not limited to the following embodiment and can be freely modified and implemented without departing from the gist of the present invention.

"To" indicating a numerical range is used to include numerical values written before and after it as a lower limit value and an upper limit value.

In the present specification, mass% has the same meaning as weight%, and parts by mass has the same meaning as parts by weight.

### <<Sulfide Solid Electrolyte>>

The sulfide solid electrolyte according to the present embodiment has a crystal phase.

The crystal phase contains a crystal represented by a compositional formula: RₐM_{b}S_{c}X_{d}. In the compositional formula, R represents an alkali metal element, M represents an element among elements of Groups 2 to 15 of the periodic table which is capable of forming a four-coordinate structure with S, M is composed of a total of three or more elements including M_{A} which is an element belonging to Group 14 and M_{B} which is an element belonging to Group 15, S represents a sulfur element, and X represents a halogen element. In the above compositional formula, a to d, which mean a content ratio (compositional ratio) in molar ratio of each element, satisfy the following relationship. Here, when two or more elements are contained as the elements represented by R, M, and X, respectively, a, b, and d representing the compositional ratios of R, M, and X respectively mean the total of the two or more elements. 3 ≤ a ≤ 7, b = 1, 3 ≤ c ≤ 6 and 0.1 ≤ d ≤ 2

In addition to the above, the crystal in the present embodiment has three or more tetrahedral structures including an M_{A}S₄ tetrahedral structure and an M_{B}S₄ tetrahedral structure.

Further, in the crystal, the proportion of Ge in M is 0.05 or less in molar ratio.

### <Crystal Phase>

The compositional formula of the crystal contained in the crystal phase in the present embodiment is represented by RₐM_{b}S_{c}X_{d}.

As described above, R in the above compositional formula represents an alkali metal element. Specifically, R preferably includes at least one selected from the group consisting of Li, Na, and K, more preferably includes at least one of Li and Na, and still more preferably includes Li.

Here, the alkali metal element means a carrier of the solid electrolyte. That is, in the case where the sulfide solid electrolyte according to the present embodiment is used in a lithium ion battery, R preferably includes Li. In the case where the sulfide solid electrolyte according to the present embodiment is used in a sodium ion battery, R preferably includes Na. Further, in the case where the sulfide solid electrolyte according to the present embodiment is used in a potassium ion battery, R preferably includes K.

In the compositional formula: RₐM_{b}S_{c}X_{d} representing the crystal in the present embodiment, based on b that is a compositional ratio of M, that is, when b = 1, the compositional ratio a of R representing the alkali metal element is 3 to 7, preferably 5 or more and 7 or less, more preferably 5.2 or more and 6.8 or less, and still more preferably 5.4 or more and 6.6 or less.

Here, the compositional ratio a is 3 or more, preferably 5 or more, more preferably 5.2 or more, and still more preferably 5.4 or more, from the viewpoint of precipitation of target crystal phase. The compositional ratio a is 7 or less, preferably 6.8 or less, and more preferably 6.6 or less from the viewpoint of improving the ionic conductivity and reducing the amount of hydrogen sulfide (H₂S) generated. In the case where a plurality of alkali metal elements are contained as R, the above compositional ratio a means the total proportion of the two or more elements.

The compositional formula: RₐM_{b}S_{c}X_{d} in the present embodiment is rewritten as a compositional formula: Rₐ(M_{AbA}M_{BbB}M_{CbC})S_{c}X_{d}. Here, M_{A} is an element belonging to Group 14 of the periodic table and is an element capable of forming a four-coordinate structure with S. M_{B} is an element belonging to Group 15 of the periodic table and is an element capable of forming a four-coordinate structure with S. M_{C} is an element belonging to Groups 2 to 13 of the periodic table and is an element capable of forming a four-coordinate structure with S. In the above compositional formula, b = bA + bB + bC = 1, where bA is a compositional ratio of the element M_{A}, bB is a compositional ratio of the element M_{B}, bC is a compositional ratio of the element M_{C}. Here, when M_{A}, M_{B}, and M_{C} each include two or more elements, each of the above compositional ratios bA, bB, and bC means the total proportion of the two or more elements.

In the present embodiment, the element M_{A} is an element belonging to Group 14 of the periodic table, which is capable of forming a four-coordinate structure with S, and forms an M_{A}S₄ tetrahedral structure. Specific examples of the element M_{A} include Si, Ge, Sn, and Pb. That is, the element M_{A} preferably includes one or more selected from Si, Ge, Sn, and Pb. Among them, from the viewpoint of the stability of the crystal structure and the ease of increasing the ionic conductivity, and from the viewpoint of the electrochemical stability among the elements of Group 14, the element M_{A} preferably includes at least one of Si and Sn, and more preferably includes Si. In the case where two or more elements M_{A} are contained, Si and Sn are preferably contained.

The proportion of the element M_{A} to the element M, that is, the value of bA is preferably 0.01 to 0.95, more preferably 0.1 to 0.9, still more preferably 0.2 to 0.8, and yet still more preferably 0.3 to 0.7. Here, the above proportion is preferably 0.01 or more, more preferably 0.1 or more, still more preferably 0.2 or more, and yet still more preferably 0.3 or more, from the viewpoint of improving the ion conductivity. The above proportion is preferably 0.95 or less, more preferably 0.9 or less, still more preferably 0.8 or less, and yet still more preferably 0.7 or less from the viewpoint of mixing the element M_{B} in a certain amount or more.

When Si is contained as the element M_{A}, the proportion of Si in the element M is preferably 0.01 to 0.6, more preferably 0.2 to 0.5, and still more preferably 0.25 to 0.4. Here, the above proportion is preferably 0.01 or more, more preferably 0.2 or more, and still more preferably 0.25 or more, from the viewpoint of improving the ion conductivity. The above proportion is preferably 0.6 or less, more preferably 0.5 or less, and still more preferably 0.4 or less, from the viewpoint of water resistance.

When Sn is contained as the element M_{A}, the proportion of Sn in the element M is preferably 0.01 to 0.6, more preferably 0.15 to 0.5, and still more preferably 0.2 to 0.4. Here, the above proportion is preferably 0.01 or more, more preferably 0.15 or more, and still more preferably 0.2 or more, from the viewpoint of the water resistance. The above proportion is preferably 0.6 or less, more preferably 0.5 or less, and still more preferably 0.4 or less, from the viewpoint of the lithium ion conductivity.

In the case where two or more elements are contained as the element M_{A}, the proportion of Si in the element M may be 0.1 to 0.6, 0.2 to 0.5, or 0.25 to 0.4. Similarly, in the case where two or more elements are contained as the element M_{A}, the proportion of Sn in the element M may be 0.1 to 0.6, 0.2 to 0.5, or 0.25 to 0.4.

Ge is an element included in the element M_{A}, and its presence is optional, and the proportion of Ge in M is 0.05 or less.

Here, in general, in formation of a tetrahedral structure, Ge has been selected from the viewpoints that the tetrahedral structure can be easily formed, an ionic radius of Ge⁴⁺ is appropriately large, the interaction with lithium ions is low, and the ionic conductivity can be easily increased.

However, as a result of studies by the present inventors, it has been found that Ge in the element M_{A} causes deterioration in oxidation resistance and reduction resistance. Therefore, from the viewpoint of improving the oxidation resistance and reduction resistance of the sulfide solid electrolyte and obtaining good cycle characteristics when applied to a secondary battery, the above proportion is 0.05 or less, preferably 0.04 or less, and more preferably 0.03 or less. The lower limit of the above proportion is not particularly limited, and the above proportion may be 0, that is, Ge may be absent.

In the present embodiment, the element M_{B} is an element belonging to Group 15 of the periodic table, which is capable of forming a four-coordinate structure with S, and forms an M_{B}S₄ tetrahedral structure. Specific examples of the element M_{B} include P, As, Sb, and Bi. That is, the element M_{B} preferably includes one or more selected from P, As, Sb, and Bi. Among them, from the viewpoint of the stability of the crystal structure and the ease of increasing the ionic conductivity, and from the viewpoint of the electrochemical stability among the elements of Group 14, at least one of P and Sb is preferably contained, Sb is more preferably contained, and P is also more preferably contained. In the case where two or more elements M_{B} are contained, P and Sb are preferably contained.

The proportion of the element M_{B} to the element M, that is, the value of bB is preferably 0.05 to 0.99, more preferably 0.1 to 0.9, still more preferably 0.2 to 0.8, and yet still more preferably 0.3 to 0.7. Here, the above proportion is preferably 0.05 or more, more preferably 0.1 or more, still more preferably 0.2 or more, and yet still more preferably 0.3 or more, from the viewpoint of improving the ion conductivity. The above proportion is preferably 0.99 or less, more preferably 0.9 or less, still more preferably 0.8 or less, and yet still more preferably 0.7 or less from the viewpoint of mixing the element M_{A} in a certain amount or more.

When P is contained as the element M_{B}, the proportion of P in the element M is preferably 0 to 0.7, more preferably more than 0 and 0.7 or less, still more preferably 0.01 to 0.5, and yet still more preferably 0.1 to 0.4. Here, in the case where P is contained as the element M_{B}, the above proportion is preferably more than 0, more preferably 0.01 or more, and still more preferably 0.1 or more, from the viewpoint of reduction resistance. The above proportion is preferably 0.7 or less, more preferably 0.5 or less, and still more preferably 0.4 or less, from the viewpoint of water resistance.

When Sb is contained as the element M_{B}, the proportion of Sb in the element M is preferably 0.01 to 0.9, more preferably 0.2 to 0.8, and still more preferably 0.3 to 0.7. Here, the above proportion is preferably 0.01 or more, more preferably 0.2 or more, and still more preferably 0.3 or more, from the viewpoint of improving the ion conductivity. The above proportion is preferably 0.9 or less, more preferably 0.8 or less, and still more preferably 0.7 or less from the viewpoint of increasing the ionic conductivity by mixing more types of elements.

In the case where two or more elements are contained as the element M_{B}, the proportion of P in the element M may be 0 to 0.5, 0.01 to 0.4, or 0.1 to 0.3. Similarly, in the case where two or more elements are contained as the element M_{B}, the proportion of Sb in the element M may be 0.1 to 0.9, 0.2 to 0.8, or 0.3 to 0.7.

In the present embodiment, the element M_{C} is an element belonging to Groups 2 to 13 of the periodic table, which is capable of forming a four-coordinate structure with S, and forms an M_{C}S₄ tetrahedral structure. The presence of the element M_{C} is optional. Specific examples of the element M_{C} include Ga, In, Cu, Al, B, Ti, V, Cr, Fe, Zn, Y, Zr, Nb, Ta, W, and La.

When the element M_{C} is contained, the element M_{C} preferably includes at least one selected from the group consisting of Al, B, Ti, Fe, Zn, Y, and Zr, and more preferably includes at least one selected from the group consisting of Al, B, Zn, and Zr, from the viewpoint of electrochemical stability. In the case where two or more elements M_{C} are contained, Al and B are preferably contained.

The proportion of the element M_{C} to the element M, that is, the value of bC is preferably 0 to 0.5, more preferably 0.001 to 0.4, and still more preferably 0.01 to 0.3. Here, in the case where the element M_{C} is contained, the above proportion is preferably more than 0, more preferably 0.001 or more, and still more preferably 0.01 or more, from the viewpoint of improving the ion conductivity. The above proportion is preferably 0.5 or less, more preferably 0.4 or less, and still more preferably 0.3 or less, from the viewpoint of water resistance.

The crystal in the present embodiment essentially contains the above elements M_{A} and M_{B}, and the element M_{C} is optional. The total number of types of the elements M_{A}, M_{B}, and M_{C} is three or more, and the above crystal has three or more types of tetrahedral structures including the M_{A}S₄ tetrahedral structure and the M_{B}S₄ tetrahedral structure. Accordingly, good water resistance can be achieved.

The reason is not clear, but it is considered that having three or more kinds of tetrahedral structures results in a high-entropy material system, and as a result, water resistance is improved. Therefore, the crystal in the present embodiment has three or more tetrahedral structures including the M_{A}S₄ tetrahedral structure and the M_{B}S₄ tetrahedral structure, and elements such as M_{A} and M_{B} are preferably elements having an atomic number larger than that of P.

Here, the crystal represented by the compositional formula: Li_{6.5}[P_{0.25}Si_{0.25}Ge_{0.25}Sb_{0.25}]S₅I described in Patent Literature 2 is obtained by a solid phase reaction method. Here, the solid phase reaction method is a method in which a raw material mixture obtained by mixing raw materials is further subjected to mechanical mixing using media such as mechanical milling, and then subjected to a solid phase reaction by heating to obtain crystals.

In contrast, it is impossible to obtain the crystal in the present embodiment, which does not contain Ge or has a small content of Ge and has three or more tetrahedral structures including the M_{A}S₄ tetrahedral structure and the M_{B}S₄ tetrahedral structure by the solid phase reaction method, or it is very difficult to do so even if the crystal is obtained. Further, it is extremely difficult to achieve the type and content of the above tetrahedral structure as desired.

On the other hand, in the present embodiment, by adopting a melting method of heating and melting a mixture of raw materials and cooling and solidifying the mixture, which is described below, a desired crystal can be obtained, and the structure of the crystal and the performance of the sulfide solid electrolyte can be controlled.

It is believed that this is because the constituent components become uniform in a molten state through a step of heating and melting the raw material mixture and cooling it, and by obtaining a crystal structure through cooling thereof, the crystal structure in which the constituent components are uniformly dispersed can be obtained. The production method according to the present embodiment is not construed as being limited to the above action mechanism.

In particular, regarding the uniformity of the constituent components, particularly PS₄ tetrahedrons and a plurality of MS₄ tetrahedrons tend to be non-uniform, and the uniformity of the tetrahedral structure can be determined based on Rietveld structure analysis of an XRD pattern. In particular, in the case of having a crystal structure of an F-43m space group, the determination can also be easily made according to the presence or absence of a diffraction pattern of a (111) plane on a low angle side of a (200) plane. That is, when a diffraction pattern of the (111) plane is obtained, it can be said that PS₄ tetrahedrons and various MS₄ tetrahedrons are not uniformly dispersed.

In the crystal in the present embodiment, the total number of types of elements of the elements M_{A}, M_{B}, and M_{C} is three or more, and the elements M_{A} and M_{B} are essential. From the viewpoint of improving the ionic conductivity, it is preferably composed of a total of three or more elements, including two or more types of at least one of the element M_{A} and the element M_{B}, and more preferably includes two or more types of the element M_{B}. In the case where M in the compositional formula is composed of a total of four or more elements, it is also preferable that both the element M_{A} and the element M_{B} include two or more elements.

M in the compositional formula of the crystal in the present embodiment may be composed of a total of three or more elements, and is preferably composed of a total of four or more elements, and more preferably five or more elements, from the viewpoint of improving the ionic conductivity. The upper limit of the number of the above elements is not particularly limited, and is preferably 8 or less, and more preferably 7 or less, as a practical configuration.

One index of the crystal in the present embodiment is an ionic radius parameter represented by the following formula using an ionic radius of the element constituting the element M. $Ionic radius parameter = \left({b}_{1}\times {r}_{1}\right) + \left({b}_{2}\times {r}_{2}\right) + … + \left({b}_{n}\times {r}_{n}\right)$

Here, when M in the compositional formula is composed of n types of elements M₁ to Mₙ (n is a natural number), b₁ to bₙ in the above formula each represent a compositional ratio of each of the elements M₁ to Mₙ. That is, (b₁ + b₂ + ... + bₙ) = 1. Each of r₁ to rₙ in the above formula represents an ionic radius (Å) for four-coordination at a valence adopted by each of the elements M₁ to Mₙ in the crystal.

It was found that the larger the value of the above ionic radius parameter, the larger the lattice of the crystal, and as a result, the ionic conductivity tends to increase.

The value of the above ionic radius parameter is preferably 0.47 to 0.55, more preferably 0.49 to 0.54, and still more preferably 0.495 to 0.53. Here, the above value is preferably 0.47 or more, more preferably 0.49 or more, and still more preferably 0.495 or more, from the viewpoint of ion conductivity. The above value is preferably 0.55 or less, more preferably 0.54 or less, and still more preferably 0.53 or less, from the viewpoint of ease of crystal structure formation.

The ionic radius (crystal radius) of each element constituting the element M, which is used for the ionic radius parameter, indicates the crystal radius, and, among ionic radii described in Reference Literature 1 below, is the ionic radius for four-coordination at the valence adopted by each element in the crystal.

Reference Literature 1: R. D. Shannon et al., Acta Cryst. A32 (1976) 751-767.

Typical ionic radii of specific elements are as follows. For the following values, the four-coordinate ionic radius in the highest valence state adopted in the crystal was used.
P: 0.31 Å, Si: 0.40 Å, Ge: 0.53 Å, Sb: 0.63 Å, Sn: 0.69 Å

Among the above examples, data of the four-coordinate structure of Sb⁵⁺ is not described in Reference Literature 1. Therefore, the value of Sb: 0.63 Å is a value inferred from four-coordinate structures of the surrounding elements. For those for which no value is available, the value may be inferred from values of surrounding elements.

In the present embodiment, the compositional ratio c of sulfur element S is 3 or more and 6 or less, preferably 4 or more and 5.3 or less, and more preferably 14.2 or more and 5.1 or less. Here, the above S forms a tetrahedral structure with the element M in the crystal in the present embodiment, and may be present as isolated sulfur S²⁻.

The above compositional ratio c is 3 or more, preferably 4 or more, and more preferably 4.2 or more, from the viewpoint of forming a tetrahedral structure with the element M without excess or deficiency. The compositional ratio c is 6 or less, preferably 5.3 or less, and more preferably 5.1 or less, from the viewpoint of reducing the proportion of the above isolated sulfur and achieving good water resistance.

The crystal in the present embodiment contains a halogen element represented by X as a constituent element. Examples of the halogen element include fluorine (F), chlorine (Cl), bromine (Br), and iodine (I). Among them, from the viewpoint of improving the ionic conductivity, at least one selected from the group consisting of chlorine, bromine, and iodine is preferably contained, at least one of bromine and iodine is more preferably contained, and iodine is still more preferably contained.

It is also preferable to contain two or more types of halogen elements from the viewpoint of improving the ionic conductivity. In this case, at least two selected from the group consisting of chlorine, bromine, and iodine are preferably contained, and bromine and iodine are more preferably contained.

The compositional ratio d of X, which is a halogen element contained in the crystal in the present embodiment, is 0.1 or more and 2 or less, preferably 0.5 or more and 1.8 or less, more preferably 0.7 or more and 1.7 or less, and still more preferably 0.9 or more and 1.6 or less. Here, the above ratio is 0.1 or more, preferably 0.5 or more, more preferably 0.7 or more, and still more preferably 0.9 or more, from the viewpoint of improving the ion conductivity. The above ratio is 2 or less, preferably 1.8 or less, more preferably 1.7 or less, and still more preferably 1.6 or less, from the viewpoint of precipitation of target crystal phase.

The crystal in the present embodiment may further contain elements other than the above R, M, S, and X as constituent elements.

Examples of other elements include N, C, and O. These elements may be present in the crystal in the form of CN, COₙ, NOₙ, SOₙ, or the like.

The crystal in the present embodiment preferably has a crystal structure of the F-43m space group, and more preferably has a cubic crystal structure of the F-43m space group, from the viewpoint of improving the ion conductivity. The crystal in the present embodiment more preferably has an argyrodite crystal structure, and still more preferably has a cubic argyrodite crystal structure. The argyrodite-type in the present description refers to a crystal structure of a group of compounds derived from a mineral represented by a compositional formula Ag₈GeS₆.

When the crystal in the present embodiment is a cubic crystal of the above F-43m space group, the lattice constant is preferably 10.25 Å to 10.45 Å, and more preferably 10.30 Å to 10.42 Å. That is, the lattice constant is preferably 10.25 Å or more, more preferably 10.30 Å or more, and is preferably 10.45 Å or less, more preferably 10.42 Å or less.

The lattice constant of the crystal is determined from Rietveld analysis of an XRD pattern or a representative peak position. When the lattice constant of the crystal is determined by a representative peak position, it is desirable to obtain an average value using two or more peaks.

The sulfide solid electrolyte according to the present embodiment may be composed only of a crystal phase composed of the above crystals, or may include other crystal phases or amorphous phases.

The content of the above crystal in the sulfide solid electrolyte according to the present embodiment is preferably 50 mass% to 100 mass%, more preferably 60 mass% to 100 mass%, and still more preferably 70 mass% to 90 mass%. Here, the above content is preferably 50 mass% or more, more preferably 60 mass% or more, and still more preferably 70 mass% or more, from the viewpoint of improving the lithium ion conductivity. The content proportion of the above crystal may be 100 mass%, that is, the sulfide solid electrolyte according to the present embodiment may be composed only of the crystal. On the other hand, from the viewpoint of moldability, the above content is preferably less than 100 mass% and more preferably 90 mass% or less.

When the crystal in the present embodiment has the crystal structure of the F-43m space group, the content of the crystal in the sulfide solid electrolyte is the same as described above. That is, the content is preferably 50 mass% or more, more preferably 60 mass% or more, still more preferably 70 mass% or more, and may be 100 mass%, less than 100 mass%, or 90 mass% or less.

### <Sulfide Solid Electrolyte>

The secondary particle diameter of the sulfide solid electrolyte according to the present embodiment is preferably small from the viewpoint of obtaining good ion conductivity when used in a secondary battery. The above secondary particle diameter is preferably 10 µm or less, more preferably 3 µm or less, and still more preferably 1 µm or less. The lower limit of the secondary particle diameter is not particularly limited, and the secondary particle diameter is generally 0.1 µm or more.

The secondary particle diameter can be measured using a Microtrac device.

The lithium ion conductivity of the sulfide solid electrolyte according to the present embodiment at 25°C is preferably 0.1 × 10⁻³ S/cm or more, more preferably 0.5 × 10⁻³ S/cm or more, and still more preferably 1 × 10⁻³ S/cm or more. The higher the conductivity, the more preferable. The upper limit of the lithium ion conductivity is not particularly limited, and the lithium ion conductivity is generally 1 × 10⁻¹ S/cm or less.

The lithium-ion conductivity can be measured by an AC impedance method. Specifically, the lithium ion conductivity is a value measured by electrochemical impedance spectroscopy (for example, potentiostat/galvanostat VSP, manufactured by Bio-Logic Sciences Instruments) under the following conditions: measurement frequency: 100 Hz to 1 MHz, measurement voltage: 100 mV, measurement temperature: 25°C.

The sulfide solid electrolyte according to the present embodiment can be identified by analyzing the crystal structure by X-ray diffraction (XRD) measurement, and analyzing the elemental composition using various methods such as ICP emission spectrometry, atomic absorption spectrometry, and ion chromatography. For example, M and S can be measured by ICP emission spectrometry, R can be measured by atomic absorption spectrometry, and X can be measured by ion chromatography.

The sulfide solid electrolyte according to the present embodiment is suitably used for an electrode mixture or a solid electrolyte layer used in a secondary battery, is particularly suitable for an all-solid-state secondary battery, and is more suitable for an all-solid-state lithium ion secondary battery.

That is, the above electrode mixture is used in a secondary battery, and contains the above sulfide solid electrolyte and an active material.

The above solid electrolyte layer is used in a secondary battery and contains the above sulfide solid electrolyte.

The above electrode mixture, solid electrolyte layer, and all-solid-state lithium ion secondary battery may further contain another solid electrolyte. The other solid electrolyte is not particularly limited, and examples thereof include a solid electrolyte having a well-known argyrodite crystal structure, a solid electrolyte having a Li₃PS₄ or LGPS crystal structure, and a Li-P-S-Ha (Ha is a halogen element)-based crystallized glass type solid electrolyte.

As the active material contained in the electrode mixture, a well-known active material can be used.

For example, a positive electrode active material is not particularly limited as long as it can reversibly occlude and release alkali metal ions, desorb and insert (intercalate) the alkali metal ions, or dope and dedope counter anions of the alkali metal ions. Here, the above alkali metal ions are preferably lithium ions.

Specific examples of the above positive electrode active material include lithium cobalt oxide, lithium nickel oxide, lithium manganese oxide, lithium nickel manganese oxide, a composite metal oxide, and a polyanion olivine positive electrode.

The negative electrode active material is also not particularly limited as long as it can reversibly occlude and release alkali metal ions, desorb and insert (intercalate) the alkali metal ions, or dope and dedope counter anions of the alkali metal ions. Here, the above alkali metal ions are preferably lithium ions.

Specific examples of the above negative electrode active material include metal lithium, carbon-based materials such as graphite, hard carbon, and soft carbon, metals capable of forming an alloy with lithium, such as aluminum, silicon, and tin, amorphous oxides such as silicon oxide and tin oxide, and lithium titanate.

The solid electrolyte layer contains the sulfide solid electrolyte according to the present embodiment, and may further contain an additive such as a binder.

As the binder, well-known materials can be used, and examples thereof include butadiene rubber, acrylate butadiene rubber, styrene butadiene rubber, polyvinylidene fluoride, and polytetrafluoroethylene. The content of the binder in the solid electrolyte layer may also be within a well-known range.

The all-solid-state secondary battery is not particularly limited as long as it contains the sulfide solid electrolyte according to the present embodiment, a positive electrode, and a negative electrode. The positive electrode or the negative electrode may be an electrode mixture containing the sulfide solid electrolyte according to the present embodiment.

The active material of the positive electrode may be the same as the positive electrode active material described in the electrode mixture, and the positive electrode may further include a positive electrode current collector, a binder, a conductive auxiliary agent, and the like as necessary. As the positive electrode current collector, a metal thin plate such as aluminum, an alloy thereof, and stainless steel, or the like can be used.

The active material of the negative electrode may be the same as the negative electrode active material described in the electrode mixture, and the negative electrode may further include a negative electrode current collector, a binder, a conductive auxiliary agent, and the like as necessary. As the negative electrode current collector, a metal thin plate such as copper or aluminum can be used.

### <<Method for Producing Sulfide Solid Electrolyte>>

The method for producing a sulfide solid electrolyte according to the present embodiment is not particularly limited as long as the sulfide solid electrolyte described in the above <<Sulfide Solid Electrolyte>> is obtained. Preferred aspects of the obtained sulfide solid electrolyte are also the same as the preferred aspects described in the above <<Sulfide Solid Electrolyte>>.

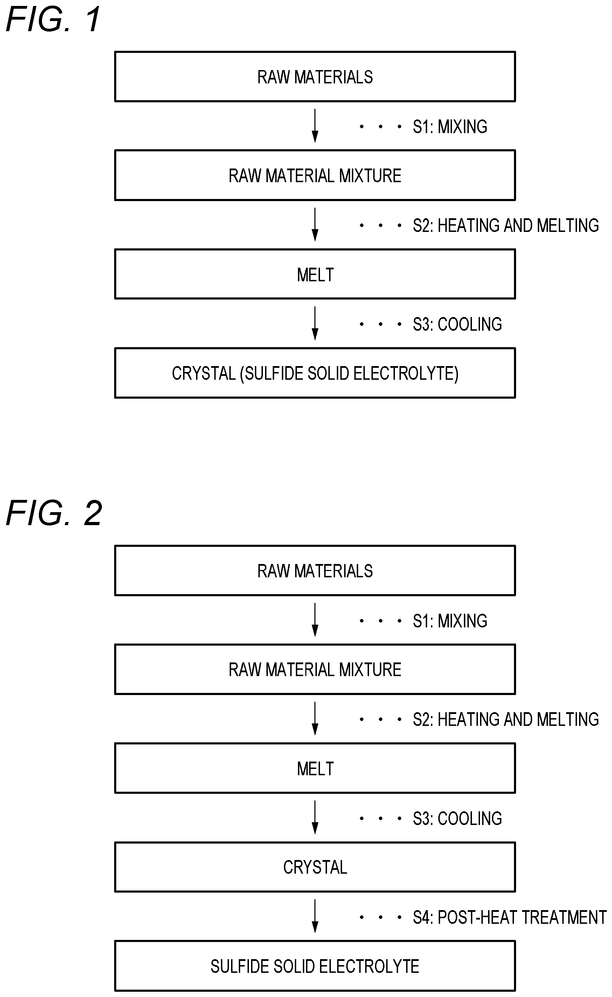

As shown in FIG. 1, an example of the method for producing the sulfide solid electrolyte according to the present embodiment includes the following steps in order.
Step S1: a step of mixing raw materials containing elements R, M, S, and X to obtain a raw material mixture
Step S2: a step of performing a heat treatment to obtain a melt of the raw material mixture obtained in step S1
Step S3: a step of cooling the melt obtained in step S2 to precipitate a crystal

Among the elements in step S1, R represents an alkali metal element, M represents an element among the elements of Groups 2 to 15 of the periodic table capable of forming a four-coordinate structure with S, M is composed of a total of three or more elements including M_{A} which is an element belonging to Group 14 and M_{B} which is an element belonging to Group 15, S represents a sulfur element, and X represents a halogen element.

As shown in FIG. 2, the production method according to the present embodiment may further include the following step S4 after step S3.
Step S4: a step of further performing a post-heat treatment by heating after the crystal is precipitated in step S3

The steps are described in order.

### <Step S1: mixing>

Step S1 in the present embodiment is a step of mixing raw materials containing elements R, M, S, and X to obtain a raw material mixture.

Among the elements in the above step, R represents an alkali metal element, M represents an element among the elements of Groups 2 to 15 of the periodic table capable of forming a four-coordinate structure with S, M is composed of a total of three or more elements including M_{A} which is an element belonging to Group 14 and M_{B} which is an element belonging to Group 15, S represents a sulfur element, and X represents a halogen element.

Examples of the alkali metal element (R) include substances such as a lithium element (Li), a sodium element (Na), and a potassium element (K). In the case where the obtained sulfide solid electrolyte is applied to a lithium ion secondary battery, the present raw material preferably includes a substance such as a lithium element (Li) as the alkali metal element (R).

As an alkali metal element (R)-containing raw material, substances containing an alkali metal element, such as an elemental alkali metal element and compounds containing an alkali metal element, can be appropriately combined and used. In the case where the alkali metal element (R) is a lithium element (Li), a Li-containing substance such as elemental Li or a Li-containing compound can be appropriately used in combination as the lithium element.

Examples of a lithium element (Li)-containing raw material include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metal lithium. The lithium element (Li)-containing raw material may be used alone or in combination of two or more types thereof.

As the lithium element (Li)-containing raw material, it is preferable to use lithium sulfide from the viewpoint of obtaining a sulfide material. In the case where the obtained sulfide solid electrolyte contains a halogen element, it is also preferable to use a lithium halide (LiX, X is a halogen element) as the lithium element (Li)-containing raw material. The lithium halide is described below.

As a raw material containing a total of three or more elements (M), which represent elements capable of forming a four-coordinate structure with S among the elements of Groups 2 to 15 of the periodic table and contain M_{A} which is an element belonging to Group 14 and M_{B} which is an element belonging to Group 15, a well-known raw material can be adopted.

For example, as an element (M)-containing raw material, an elemental substance composed of the element (M), an oxide of the element (M), a sulfide of the element (M), and a halide of the element (M) can be appropriately used in combination.

Specific examples of the elements are shown below.

When the element M includes a phosphorus element (P), P-containing substances such as elemental P or P-containing compounds can be appropriately used in combination as phosphorus element (P)-containing raw materials. The phosphorus element (P)-containing raw material may be used alone or in combination of two or more types thereof.

Examples of the phosphorus element (P)-containing raw material include phosphorus sulfides such as phosphorus pentasulfide (P₂S₅) and phosphorus trisulfide (P₂S₃), phosphorus compounds such as sodium phosphate (Na₃PO₄), and elemental phosphorus.

When the element M includes a tin element (Sn), examples of a tin element (Sn)-containing raw material include Sn (elemental Sn), SnS, SnS₂, SnO, SnO₂, and SnCl₂. Among them, from the viewpoint of the lithium ion conductivity, SnS₂ and SnCl₂ are preferred, and SnS₂ is more preferred. The tin element (Sn)-containing raw material may be used alone or in combination of two or more types thereof.

When the element M includes an antimony element (Sb), examples of an antimony element (Sb)-containing raw material include Sb (elemental Sb), Sb₂S₃, and Sb₂S₅. The antimony element (Sb)-containing raw material may be used alone or in combination of two or more types thereof.

When the element M includes a germanium element (Ge), examples of a Ge element-containing raw material include GeO₂, GeS, GeS₂, and GeCl₂. Among them, GeS₂ and GeCl₂ are preferred, and GeS₂ is more preferred, from the viewpoint of the lithium ion conductivity. These compounds may be used alone or in combination of two or more types thereof.

When the element M includes an indium element (In), examples of an In element-containing raw material include In₂O₃, In₂S₃, and InCl₃. Among them, In₂S₃ and InCl₃ are preferred, and In₂S₃ is more preferred, from the viewpoint of the lithium ion conductivity. These compounds may be used alone or in combination of two or more types thereof.

When the element M includes a copper element (Cu), examples of a Cu element-containing raw material include Cu₂O, CuO, Cu₂S, CuS, and CuCl₂. Among them, CuS and CuCl₂ are preferred, and CuS is more preferred, from the viewpoint of the lithium ion conductivity. These compounds may be used alone or in combination of two or more types thereof.

In the case where the element M includes a silicon element (Si), examples of a Si-containing raw material include Si (elemental Si), SiO₂, and SiS₂. Among them, SiO₂ is more preferred from the viewpoint of the lithium ion conductivity. The silicon element (Si)-containing raw material may be used alone or in combination of two or more types thereof.

In the case where the element M includes an aluminum element (Al), examples of an Al-containing raw material include Al₂S₃, Al₂O₃, and AlCl₃. Among them, Al₂S₃ and AlCl₃ are preferred, and Al₂S₃ is more preferred, from the viewpoint of the lithium ion conductivity. These compounds may be used alone or in combination of two or more types thereof.

As the sulfur element (S)-containing raw materials, S-containing raw materials such as elemental S and S-containing compounds can be appropriately combined and used. The sulfur element (S)-containing raw material may be used alone or in combination of two or more types thereof. Li₂S is a compound serving as both the sulfur element (S)-containing raw material and the lithium element (Li)-containing raw material described above. P₂S₅ is a compound serving as both the sulfur element (S)-containing raw material and the phosphorus element (P)-containing raw material described above.

Further, SnS is a compound serving as both the sulfur element (S)-containing raw material and the Sn-containing raw material described above. Sb₂S₃ is a compound serving as both the sulfur element (S)-containing raw material and the Sb-containing raw material described above.

Examples of the sulfur element (S)-containing raw material include phosphorus sulfides such as phosphorus pentasulfide (P₂S₅) and phosphorus trisulfide (P₂S₃), other sulfur compounds containing phosphorus, elemental sulfur, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS).

Examples of the halogen element-containing raw material include lithium halides (LiHa) such as lithium fluoride (LiF), lithium chloride (LiCl), lithium bromide (LiBr), and lithium iodide (LiI), phosphorus halides, phosphoryl halides, sulfur halides, sodium halides, and boron halides. Among them, lithium halide is preferred from the viewpoint of preventing the inclusion of elements other than the elements constituting the target sulfide solid electrolyte. These compounds may be used alone or in combination of two or more types thereof.

Further, halogens may be introduced as HX or X₂ gas, or may be introduced as Br₂ or I₂ when X is Br or I.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

### <Step S2: heating and melting>

Step S2 in the present embodiment is a step of performing a heat treatment to obtain a melt of the raw material mixture obtained in step S1.

The specific method of heating and melting the raw material mixture is not particularly limited, and the raw material mixture is charged into a heat-resistant container and heated in a heating furnace. The raw material mixture may be sealed in the heat-resistant container. Melting may be performed in an atmosphere containing a sulfur element or the like. Examples of the atmosphere containing a sulfur element include a mixed gas atmosphere containing an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above material, or may be a container having a layer made of carbon, an oxide, a nitride, a carbide, or the like, such as a carbon-coated quartz tube.

As the furnace in the heating furnace for use in the heating and melting, a well-known furnace including a heating unit can be appropriately used, and a material and a size of the furnace can be freely selected.

The temperature in the heating and melting is not particularly limited as long as the raw material mixture is melted, and is preferably 600°C or higher, more preferably 600°C to 1,000°C, still more preferably 630°C to 950°C, yet still more preferably 650°C or higher and lower than 900°C, and particularly preferably 650°C or higher and lower than 850°C. Here, the temperature in the heating and melting is preferably 600°C or higher, more preferably 630°C or higher, and still more preferably 650°C or higher, from the viewpoint of homogenizing the melt in a short time. The temperature in the heating and melting is preferably 1,000°C or lower, more preferably 950°C or lower, still more preferably lower than 900°C, and particularly preferably lower than 850°C, from the viewpoint of preventing deterioration or decomposition of components in the melt.

The temperature in the heating and melting is the temperature of the melt generated in the furnace, and can be adjusted by the heating unit provided in the furnace.

The time for the heating and melting is not particularly limited as long as the raw material mixture is melted, and is, for example, preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or longer, more preferably 30 minutes or longer, still more preferably 45 minutes or longer, and particularly preferably 1 hour or longer, from the viewpoint of allowing the reaction to proceed smoothly. The time for the heating and melting is preferably 10 hours or shorter, more preferably 9.5 hours or shorter, and still more preferably 9 hours or shorter, from the viewpoint of preventing deterioration or decomposition of the component in the melt due to heating.

The atmosphere for the heating and melting is preferably an inert atmosphere. Examples of the inert atmosphere include a nitrogen gas atmosphere, an argon gas atmosphere, and a helium gas atmosphere. The heating and melting may be performed in an atmosphere of a gas containing the sulfur element.

The dew point during the heating and melting is preferably -20°C or lower from the viewpoint of preventing a side reaction of melt with water vapor, oxygen, and the like. The lower limit of the above dew point is not particularly limited, and is generally about -80°C. The oxygen concentration is preferably 1,000 ppm by volume or less.

The pressure during the heating and melting is not particularly limited as long as the raw material mixture is melted, and for example, ambient pressure or a slight pressurization is preferred, and ambient pressure is more preferred.

The heating and melting is more preferably performed, for example, in a temperature range of 600°C to 1,000°C for 10 minutes to 10 hours, and in addition to the above, is further preferably performed under one or more conditions of an inert atmosphere, a condition of a dew point of -20°C or lower, and ambient pressure or a slight pressurization, more preferably performed under two or more conditions thereof, and particularly preferably performed under all three conditions.

In step S2, it can be confirmed that the raw material mixture is completely melted by the absence of peaks derived from crystals in high-temperature X-ray diffraction measurement.

In step S2, in order to facilitate precipitation of the crystal in subsequent step S3, a compound serving as a crystal nucleus may be contained in the melt.

The method of incorporating the compound serving as a crystal nucleus into the melt is not particularly limited, and examples thereof include a method of adding the compound serving as a crystal nucleus to the raw materials, and a method of directly adding the above compound serving as a crystal nucleus to the melt during the heating and melting.

Examples of the compound serving as a crystal nucleus include oxides, oxynitrides, nitrides, carbides, other chalcogen compounds, and halides. The compound serving as a crystal nucleus is preferably a compound having a certain degree of compatibility with the melt. The compound completely incompatible with the melt cannot serve as a crystal nucleus.

### <Step S3: cooling>

Step S3 in the present embodiment is a step of cooling the melt obtained in the above step S2 to precipitate a crystal. Accordingly, a crystal represented by the compositional formula: RₐM_{b}S_{c}X_{d} is obtained.

The crystal obtained in step S3 may be used as the sulfide solid electrolyte, or a resultant obtained by subjecting the solid to the subsequent post-heat treatment in step S4 may be used as the sulfide solid electrolyte.

In step S3, the melt obtained in step S2 is discharged through, for example, a discharge port provided in the furnace at any timing, and the production method proceeds to a step of cooling and solidifying the melt. The cooling of the melt can be performed by a known method and is not particularly limited. For example, from the viewpoint of increasing a cooling rate, cooling using a twin roller, which is generally said to have the highest rapid cooling rate, is preferred.

The cooling rate is preferably 0.1°C/sec to 10,000°C/sec, more preferably 0.5°C/sec to 5,000°C/sec, and still more preferably 1°C/sec to 1,000°C/sec. Here, the cooling rate is preferably 0.1°C/sec or more, more preferably 0.5°C/sec or more, and still more preferably 1°C/sec or more, from the viewpoint of increasing composition homogeneity and preventing variation in quality. An upper limit value of the cooling rate is not particularly limited, and the upper limit value is 1,000,000°C/sec or less in consideration of the cooling rate of a twin roller, which is generally said to have the highest rapid cooling rate, and from the viewpoint of actual production, the cooling rate is more preferably 10,000°C/sec or less, still more preferably 5,000°C/sec or less, and yet still more preferably 1,000°C/sec or less.

On the other hand, a sulfide solid electrolyte having a crystal phase may be obtained by slow cooling during the cooling. The sulfide solid electrolyte may have a crystal phase and an amorphous phase.

The cooling rate in the case of the slow cooling is preferably 0.01°C/sec to 500°C/sec, and more preferably 0.05°C/sec to 450°C/sec. The cooling rate may be 0.01°C/sec to 10°C/sec or 0.05°C/sec to 5°C/sec.

Here, the above cooling rate is preferably 0.01°C/sec or more, more preferably 0.05°C/sec or more, and is preferably 500°C/sec or less, more preferably 450°C/sec or less. The cooling rate may be 10°C/sec or less or 5°C/sec or less. The cooling rate may be appropriately adjusted according to crystallization conditions.

The atmosphere during the cooling is preferably an inert atmosphere with a low moisture content, similar to that in the heating and melting in step S2.

The cooling and solidification is preferably performed under ambient pressure. Here, ambient pressure means that the pressure is not controlled during the cooling. Specifically, the pressure is about 0.8 atm to 1.2 atm.

### <Step S4: post-heat treatment>

Step S4 in the present embodiment is a step of performing a post-heat treatment by heating again after the crystal is precipitated in step S3, and is optional.

When the solid obtained in step S3 contains an amorphous phase, crystallization is promoted by the post-heat treatment in step S4. The lithium ion conductivity may be increased by rearranging ions in the crystal structure through the above post-heat treatment.

That is, the above post-heat treatment refers to at least one of a heat treatment for crystallizing the obtained solid and a heat treatment for rearranging the ions in the crystal structure.

The temperature in the post-heat treatment is, for example, preferably 300°C to 600°C, more preferably 350°C to 600°C, still more preferably 355°C to 550°C, and particularly preferably 360°C to 500°C. Here, the temperature of the post-heat treatment is preferably 300°C or higher, more preferably 350°C or higher, still more preferably 355°C or higher, and yet still more preferably 360°C or higher, from the viewpoint of shortening the heat treatment time. The temperature of the post-heat treatment is preferably 600°C or lower, more preferably 550°C or lower, and still more preferably 500°C or lower, from the viewpoint of preventing sintering of particles.

The time for the post-heat treatment is preferably 10 minutes to 20 hours, more preferably 10 minutes to 10 hours, still more preferably 30 minutes to 9.5 hours, yet still more preferably 45 minutes to 9 hours, and particularly preferably 1 hour to 9 hours. Here, the time for the heat treatment is preferably 10 minutes or longer, more preferably 30 minutes or longer, still more preferably 45 minutes or longer, and particularly preferably 1 hour or longer, from the viewpoint of facilitating the production stability. The time for the post-heat treatment is preferably 20 hours or shorter, more preferably 10 hours or shorter, still more preferably 9.5 hours or shorter, and yet still more preferably 9 hours or shorter, from the viewpoint of production costs.

The atmosphere in the post-heat treatment is preferably an inert atmosphere. Examples of the inert atmosphere include a nitrogen gas atmosphere, an argon gas atmosphere, and a helium gas atmosphere.

The dew point during the post-heat treatment is preferably -20°C or lower, and a lower limit thereof is not particularly limited and is generally about -80°C. The oxygen concentration is preferably 1,000 ppm by volume or less.

The post-heat treatment is more preferably performed, for example, in a temperature range of 300°C to 600°C for 10 minutes to 20 hours, and in addition to the above, is further preferably performed under at least one condition of an inert atmosphere and a condition of a dew point of -20°C or lower, and is particularly preferably performed under both conditions.

### EXAMPLES

Hereinafter, the present invention is specifically described with reference to Examples, but the present invention is not limited thereto. Examples 1 to 8 and Examples 12 and 13 are Inventive Examples, and Examples 9 to 11 are Comparative Examples.

### <<Example 1 to Example 11>>

Under a dry nitrogen gas atmosphere, raw materials containing the respective elements were weighed so as to have compositional ratios shown in Table 1, and mixed in a mortar to obtain a raw material mixture.

As raw materials containing the respective elements, lithium sulfide powder (manufactured by Sigma, purity: 99.98%) as a raw material containing Li and S, phosphorus pentasulfide powder (manufactured by Sigma, purity: 99%) as a raw material containing P and S, SnS₂ powder (manufactured by Mitsuwa Chemicals Co., Ltd., purity: 99.5%) as a raw material containing Sn, Sb₂S₃ powder (manufactured by Mitsuwa Chemicals Co., Ltd., purity: 99.98%) as a raw material containing Sb, SiS₂ powder (manufactured by Mitsuwa Chemicals Co., Ltd., purity: 99%) as a raw material containing Si, GeS₂ (manufactured by Kojundo Chemical Laboratory Co., Ltd., purity: 99.99%) as a raw material containing Ge, lithium bromide powder (manufactured by Sigma, purity: 99.995%) as a raw material containing Br and Li, lithium iodide powder (manufactured by Tokyo Chemical Industry Co., Ltd., purity: 99.9% low moisture grade) as a raw material containing I and Li, and lithium chloride powder (manufactured by Sigma, purity: 99%) as a raw material containing Cl and Li, were used. When the Sb₂S₃ powder was used as the raw material containing Sb, the composition was adjusted by further using a sulfur raw material (manufactured by Sigma, purity: 99.98%).

The raw material mixture obtained above was placed in a quartz tube and vacuum sealing was performed. Thereafter, the raw material mixture was heated in an electric furnace at 700°C to 800°C for 1 hour to obtain a completely molten material.

Next, cooling was performed to room temperature at 1°C/sec to 5°C/sec to precipitate crystals, thereby obtaining a sulfide solid electrolyte.

Table 1 also shows, as the "Composition parameter", a proportion of P to M (PS₄/MS₄), the type of the MS₄ tetrahedral structure (tetrahedral type), and a value of the ionic radius parameter for the element M represented by the compositional formula: RₐM_{b}S_{c}X_{d}.

As the value used for the ionic radius parameter, the following values were used for the ionic radius for four-coordination at a valence considered to be adopted by each element in the solid electrolyte crystal structure.

P: 0.31 Å, Si: 0.40 Å, Ge: 0.53 Å, Sb: 0.63 Å, Sn: 0.69 Å.

### <<Examples 12 and 13>>

The crystal obtained in Example 7 was further subjected to a post-heat treatment at 400°C for 1 hour (Example 12) or at 450°C for 1 hour (Example 13) in a dry nitrogen gas atmosphere, followed by cooling again to room temperature at 1°C/sec, thereby obtaining a sulfide solid electrolyte.

### <<Evaluation>>

### <X-Ray Diffraction Measurement (XRD)>

For the sulfide solid electrolytes of Examples 1 to 13, the sulfide solid electrolyte was pulverized in a mortar and passed through a 100 µm sieve, thereby obtaining a powder having a D50 of about 10 µm to 20 µm. Here, D50 means a volume-based median diameter.

The powder obtained above was subjected to an XRD measurement using an X-ray diffractometer (SmartLab, manufactured by Rigaku Corporation) without exposure to the atmosphere under the following conditions.

Radiation Source: CuKα ray (λ = 1.5418 Å), tube voltage: 45 kV, tube current: 200 mA, scanning angle: 10° to 100°, scanning speed: 5°/min, step width: 0.01°/step.

The measurement was performed after mixing silicon as an internal standard in an amount of 10 mass%.

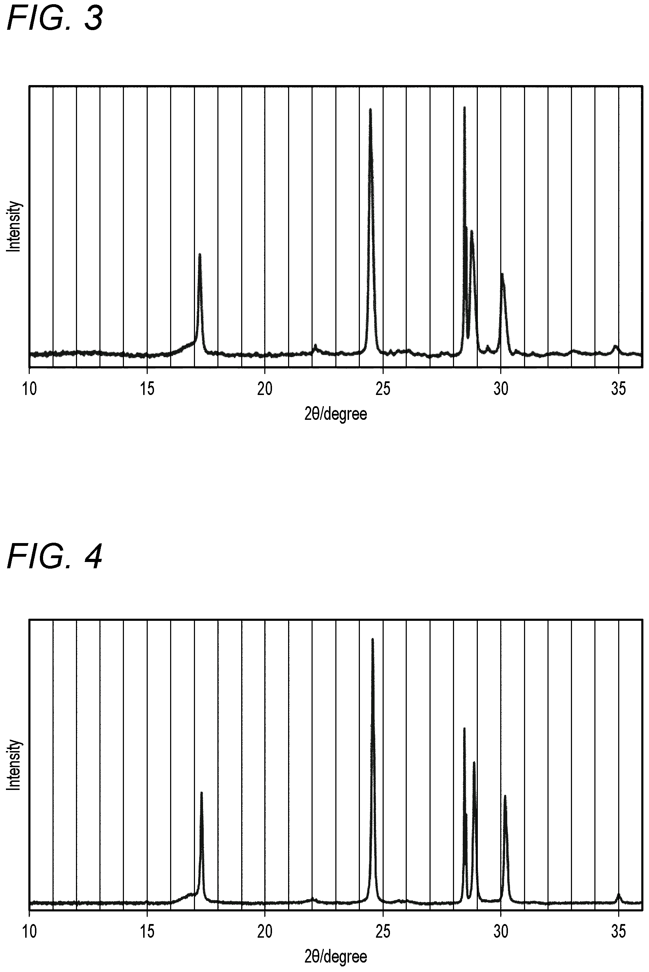

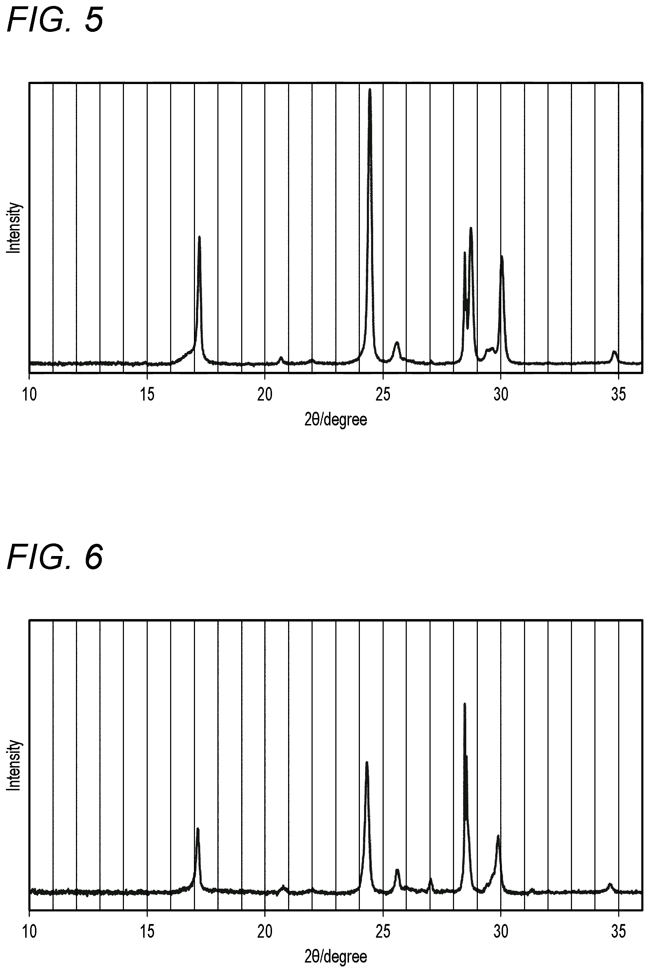

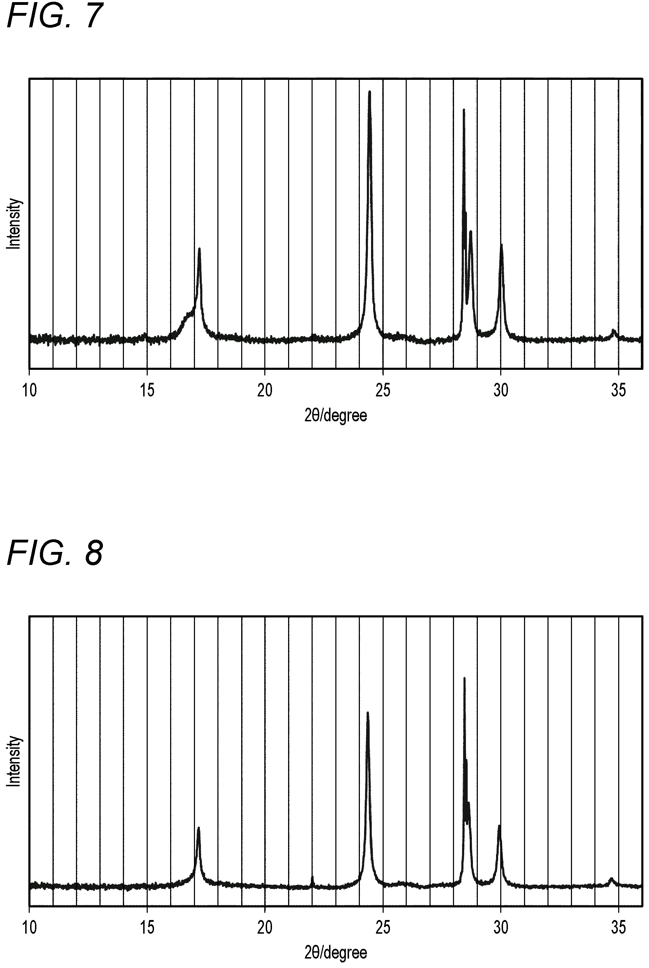

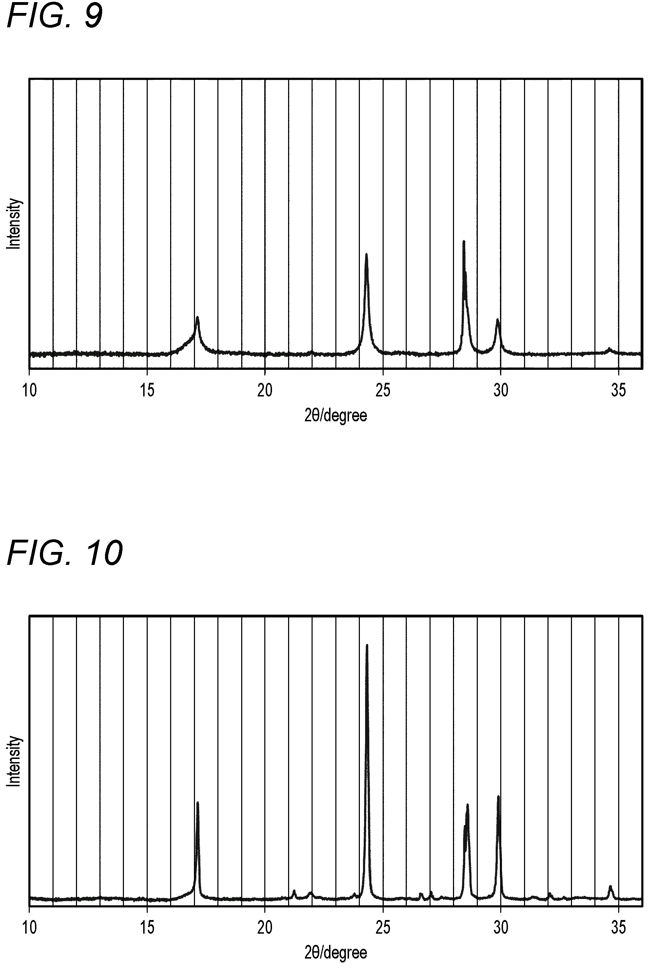

As an example, XRD patterns of the sulfide solid electrolytes of Examples 1 to 8 are shown in FIGS. 3 to 10, respectively, and from the XRD patterns, it was found that crystals having the same composition as the composition shown in Table 1 were obtained in all of Examples 1 to 11. In addition, it was confirmed that crystals in Examples 12 and 13 had the same composition as that of Example 7, and it was suggested that, although the composition remained unchanged, their crystal structure had changed from that of Example 7 due to the post-heat treatment. The peak at 2θ = 28.5° in FIGS. 3 to 10 is the internal standard of Si. The broad peak observed at 2θ = 16° to 17° is a peak derived from a window material for an XRD non-atmospheric exposure holder. Each of the crystals obtained above was a cubic argyrodite-type having a crystal structure of F-43m space group.

Each MS₄ tetrahedral structure of the crystals in the sulfide solid electrolytes in Examples 1 to 13 was confirmed by Rietveld analysis of an XRD pattern. In the XRD pattern, since there was no diffraction pattern (diffraction peak) of the (111) plane on the low-angle side of the (200) plane, it was found that these tetrahedral structures were uniformly arranged.

The type and number of MS₄ tetrahedral structures in each example are shown in "Tetrahedral type" in Table 1.

### <Lithium Ion Conductivity>

The sulfide solid electrolytes of Examples 1 to 13 were pulverized in a mortar and passed through a 100 µm sieve, thereby obtaining a powder having a D50 of 10 µm to 20 µm. Here, D50 means a volume-based median diameter.

The powder obtained above was used as a sample, and the lithium ion conductivity of the sample was measured by electrochemical impedance spectroscopy (potentiostat/galvanostat VSP, manufactured by Bio-Logic Sciences Instruments). The results are shown in "Ionic conductivity [mS/cm]" in Table 1.

Measurement conditions were a measurement frequency of 100 Hz to 1 MHz, a measurement voltage of 100 mV, and a measurement temperature of 25°C.

### <Water Resistance: Retention Rate of Lithium Ion Conductivity>

The sulfide solid electrolytes of Examples 1 to 11 were pulverized in a mortar and passed through a 100 µm sieve, thereby obtaining a powder having a D50 of 10 µm to 20 µm.

A 150 mg portion of the powder obtained above was weighed and used as a sample, and nitrogen gas having a dew point of -20°C was flowed at a flow rate of 0.5 L/min for 1 hour. Thereafter, vacuum heating was performed at 80°C for 1 hour, and the lithium ion conductivity was measured under the same conditions as described in the above <Lithium Ion Conductivity>. The results are shown in "Conductivity (after exposure) [mS/cm]" in "Water resistance" in Table 1.

The retention rate of lithium ion conductivity was calculated from the value of the lithium ion conductivity obtained in the present test, with the value obtained in the above <Lithium ion conductivity> taken as 100% (reference). The results are shown in "Conductivity (retention rate) [%]" in "Water resistance" in Table 1.

### <Battery Characteristic>

The sulfide solid electrolytes of Examples 1 to 11 were pulverized in a mortar and passed through a 45 µm sieve, thereby obtaining a powder having a D50 of about 5 µm.

LiNi_{1/3}Co_{1/3}Mn_{1/3}O₂ particles coated with lithium niobate having an average particle diameter of 7 µm (positive electrode active material) were used as a positive electrode active material, and 34 parts by mass of the sulfide-based solid electrolyte powder prepared above, 60 parts by mass of the positive electrode active material, and 6 parts by mass of a conductive auxiliary agent (acetylene black, HS100, manufactured by Denka Company Limited) were mixed to prepare a positive electrode mixture.

Into a plastic cylinder having a diameter of 10 mm was charged 80 mg of the sulfide solid electrolyte powder prepared above and pressure-molded to form a solid electrolyte layer. Next, 6 mg of the positive electrode mixture prepared above was charged into the same cylinder, and pressure molding was performed again to form a positive electrode layer. Further, an indium foil and a lithium foil were charged from a side opposite to the positive electrode mixture to form a negative electrode layer. An all-solid-state lithium ion secondary battery (half cell) was prepared in this manner, and a charge and discharge test was performed at a confining pressure of 10 kN.

The obtained half cell was subjected to 10 cycles of charging and discharging in the range of 4.3 V to 2.5 V vs. Li⁺/Li in an environment of 25°C. The rate was 0.05 C for both charging and discharging.

The ratio of the discharge capacity in the tenth cycle to the discharge capacity in the first cycle (discharge capacity retention rate [%]) was determined and evaluated according to the following criteria.
A: The discharge capacity retention rate is 90% or more, which is very good.
B: The discharge capacity retention rate is 70% or more and less than 90%, which is good.
C: The discharge capacity retention rate was less than 70%, which was poor.

The results are shown in "Battery characteristics" in Table 1.

**[Table 1]**

| | Composition (mol) | Composition parameter | | | |
|---|---|---|---|---|---|
| | | PS₄/MS₄ | Tetrahedral type | | Ionic radius parameter |
| Example 1 | Li_{5.9}[P_{0.6}Sn_{0.2}Sb_{0.2}]S_{4.7}I_{1.3} | 0.60 | 3 types | PS₄, SnS₄, SbS₄ | 0.450 |
| Example 2 | Li_{5.6}[P_{0.6}Sn_{0.2}Sb_{0.2}]S_{4.4}Br_{0.8}I_{0.8} | 0.60 | 3 types | PS₄, SnS₄, SbS₄ | 0.450 |
| Example 3 | Li_{6.4}[P_{0.25}Si_{0.25}Sn_{0.25}Sb_{0.25}]S_{4.9}I_{1.1} | 0.25 | 4 types | PS₄, SiS₄, SnS₄, SbS₄ | 0.508 |
| Example 4 | Li_{6.5}[P_{0.25}Si_{0.5}Sb_{0.25}]S₅I | 0.25 | 3 types | PS₄, SiS₄, SbS₄ | 0.435 |
| Example 5 | Li_{5.98}[P_{0.25}Si_{0.375}Sb_{0.375}]Sb_{4.6}Br_{0.7}I_{0.7} | 0.25 | 3 types | PS₄, SiS₄, SbS₄ | 0.464 |
| Example 6 | Li_{6.1}[P_{0.25}Si_{0.3}Sb_{0.2}Sb_{0.25}]S_{4.6}I_{1.4} | 0.25 | 4 types | PS₄, SiS₄, SnS₄, SbS₄ | 0.493 |
| Example 7 | Li_{6.375}[P_{0.1}Si_{0.375}Sb_{0.525}]S₅I | 0.10 | 3 types | PS₄, SiS₄, SbS₄ | 0.512 |
| Example 8 | Li_{6.375}[P_{0.1}Si_{0.325}Ge_{0.05}Sb_{0.525}]S₅I | 0.10 | 4 types | PS₄, SiS₄, GeS₄, SbS₄ | 0.518 |
| Example 9 | Li₆PS₅Cl | 1.00 | 1 type | PS₄ | 0.310 |
| Example 10 | Li_{6.5}[P_{0.25}Si_{0.25}Ge_{0.25}Sb_{0.25}]S₅I | 0.25 | 4 types | PS₄, SiS₄, GeS₄, SbS₄ | 0.468 |
| Example 11 | Li_{6.6}[Si_{0.6}Sb_{0.4}]S₅I | 0.00 | 2 types | SiS₄, SbS₄ | 0.492 |

**(Table 1 continued)**

| | Ion conductivity [mS/cm] | Water resistance | | Battery characteristics |
|---|---|---|---|---|
| | | Conductivity (after exposure) [mS/cm] | Conductivity (retention rate) [%] | |
| Example 1 | 0.7 | 0.7 | > 90% | A |
| Example 2 | 1.3 | 1.2 | > 90% | A |
| Example 3 | 0.8 | 0.8 | > 90% | A |
| Example 4 | 0.7 | 0.7 | > 90% | A |
| Example 5 | 2.3 | 2.2 | > 90% | A |
| Example 6 | 2.2 | 2.1 | > 90% | A |
| Example 7 | 3.2 | 3.0 | > 90% | A |
| Example 8 | 2.5 | 2.2 | > 90% | B |
| Example 9 | 2.1 | 0.1 | 5% | A |
| Example 10 | 1.6 | 1.4 | > 90% | C |
| Example 11 | 1.5 | 0.5 | 35% | B |

From the above results, the sulfide solid electrolyte according to the present embodiment had excellent water resistance and good battery characteristics.

In particular, comparison of the results of Examples 1 to 8 with the results of Examples 9 and 11 showed that very good water resistance was achieved by the crystal including three or more MS₄ tetrahedral structures. On the other hand, from the results of Examples 8 and 10, even when the crystal included three or more MS₄ tetrahedral structures, the cycle characteristics deteriorated when the crystal contained Ge in a certain amount or more. It is considered that this is because the oxidation resistance and the reduction resistance deteriorated by including the GeS₄ tetrahedral structure in a certain amount or more.

Further, the lithium ion conductivity at 25°C in Example 7 was 3.2 mS/cm, whereas the lithium ion conductivities of Examples 12 and 13 were 6.5 mS/cm and 7.2 mS/cm, respectively. From this, it was found that the lithium ion conductivity was increased by further performing a post-heat treatment by heating after the crystals were precipitated.

Although the present invention has been described in detail with reference to specific embodiments, it is apparent to those skilled in the art that various changes and modifications can be made without departing from the spirit and scope of the present invention. The present application is based on a Japanese Patent Application No. 2023-206287 filed on December 6, 2023, the content of which is incorporated herein by reference.

## Claims

1. A sulfide solid electrolyte comprising a crystal phase,
wherein the crystal phase comprises a crystal represented by a compositional formula: RₐM_{b}S_{c}X_{d},
in the compositional formula, R represents an alkali metal element, M represents an element among elements of Groups 2 to 15 of the periodic table which is capable of forming a four-coordinate structure with S, and M is composed of a total of three or more elements comprising M_{A} which is an element belonging to Group 14 and M_{B} which is an element belonging to Group 15, S represents a sulfur element, and X represents a halogen element,
in the compositional formula, 3 ≤ a ≤ 7, b = 1, 3 ≤ c ≤ 6, and 0.1 ≤ d ≤ 2 are satisfied,
the crystal comprises three or more tetrahedral structures comprising an M_{A}S₄ tetrahedral structure and an M_{B}S₄ tetrahedral structure, and
in the crystal, a proportion of Ge in M is 0.05 or less in terms of a molar ratio.

2. The sulfide solid electrolyte according to claim 1, comprising, as R in the compositional formula, at least one selected from the group consisting of Li, Na, and K.

3. The sulfide solid electrolyte according to claim 1, comprising, as M_{A} included in M in the compositional formula, one or more selected from Si, Ge, Sn, and Pb, and
comprising, as M_{B} included in M in the compositional formula, one or more selected from P, As, Sb, and Bi.

4. The sulfide solid electrolyte according to claim 1, comprising Sb as M_{B} included in M in the compositional formula.

5. The sulfide solid electrolyte according to claim 2,
wherein a proportion of Sb in M in the crystal is 0.01 to 0.9 in a molar ratio.

6. The sulfide solid electrolyte according to claim 1, comprising Si as M_{A} included in M in the compositional formula.

7. The sulfide solid electrolyte according to claim 4,
wherein a proportion of Si in M in the crystal is 0.01 to 0.6 in a molar ratio.

8. The sulfide solid electrolyte according to claim 1, comprising P as M_{B} included in M in the compositional formula.

9. The sulfide solid electrolyte according to claim 8,
wherein a proportion of P in M in the crystal is more than 0 and 0.7 or less in a molar ratio.

10. The sulfide solid electrolyte according to claim 1,
wherein M in the compositional formula is composed of a total of three or more elements comprising two or more of at least one of M_{A} which is an element belonging to Group 14 and M_{B} which is an element belonging to Group 15.

11. The sulfide solid electrolyte according to claim 1,
wherein M in the compositional formula is composed of a total of four or more elements.

12. The sulfide solid electrolyte according to claim 1,
wherein the crystal has a crystal structure of an F-43m space group.

13. The sulfide solid electrolyte according to claim 12,
wherein a content of a crystal having the crystal structure of the F-43m space group in the sulfide solid electrolyte is 50 mass% or more.

14. The sulfide solid electrolyte according to claim 1,
wherein in the crystal, a value of an ionic radius parameter is 0.47 to 0.55, wherein the ionic radius parameter is represented, using an ionic radius of an element constituting M, by the following formula:$Ionic radius parameter = \left({b}_{1}\times {r}_{1}\right) + \left({b}_{2}\times {r}_{2}\right) + . . . + \left({b}_{n}\times {r}_{n}\right) ,$
wherein M in the compositional formula is composed of n types of elements M₁ to Mₙ, where n is a natural number, b₁ to bₙ in the formula each represent a compositional ratio of each of the elements M₁ to Mₙ, (b₁ + b₂ + ... + bₙ) = 1 is satisfied, and r₁ to rₙ each represent an ionic radius (Å) for four-coordination at a valence adopted by each of the elements M₁ to Mₙ in the crystal.

15. The sulfide solid electrolyte according to claim 1,
wherein a lithium ion conductivity at 25°C is 0.1 × 10⁻³ S/cm or more.

16. A method for producing the sulfide solid electrolyte according to any one of claims 1 to 15, the method comprising, in order:
mixing raw materials comprising elements R, M, S, and X to obtain a raw material mixture;
performing a heat treatment to obtain a melt of the raw material mixture; and
cooling the melt to precipitate a crystal,
wherein among the elements, R represents an alkali metal element, M represents an element among the elements of Groups 2 to 15 of the periodic table which is capable of forming a four-coordinate structure with S, M is composed of a total of three or more elements comprising M_{A} which is an element belonging to Group 14 and M_{B} which is an element belonging to Group 15, S represents a sulfur element, and X represents a halogen element.

17. The method for producing the sulfide solid electrolyte according to claim 16, further comprising performing a post-heat treatment by heating after the crystal is precipitated.

18. The method for producing the sulfide solid electrolyte according to claim 17,
wherein the post-heat treatment is performed under a condition of a temperature of 300°C to 600°C, a time of 10 minutes to 20 hours, an inert atmosphere, and a dew point of - 20°C or lower.
